# EUROPEAN PATENT APPLICATION

(11) **EP 4 759 553 A1**
(43) Date of publication of application: **17.06.2026**
(21) Application number: 25222433.2
(22) Date of filing: 11.12.2025
(51) Int. Cl.: B41M 5/50, B41M 7/00, B65B 61/00, B41M 5/00, B32B 29/00, B32B 38/00, B41J 11/00

(54) **LAMINATED PACKAGING MATERIAL, CONVERTING UNIT FOR MANUFACTURING A LAMINATED PACKAGING MATERIAL, AND METHOD FOR MANUFACTURING A LAMINATED PACKAGING MATERIAL**

(30) Priority: 12.12.2024 EP 24219461
(71) Applicant: Tetra Laval Holdings & Finance S.A., 1009 Pully (CH)
(72) Inventor: OLSSON, Sverker, 221 86 Lund (SE); ERIKSON, Fredrik, 221 86 Lund (SE)
(74) Representative: Tetra Pak Patent Attorneys

(57) **Abstract**

A continuous in-line method for manufacturing a laminated packaging material (100), comprising:
providing a paperboard layer (110),
adding (S20) a reflective layer (130)to the paperboard layer (110), said reflective layer (130) being configured to reflect infrared radiation (IR),
ink-jet printing (S40) a décor layer (150) such that the reflective layer (130) is at least to some extent arranged between the paperboard layer (130) and the décor layer (150), and
drying (S50) the décor layer (150) by exposing the décor layer (150) to infrared radiation (IR).

## Description

### Technical Field

The invention relates to a method for manufacturing a laminated packaging material for liquid food packaging containers, a converting unit, and a laminated packaging material.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting procedure a paperboard layer, forming the core layer of the laminated packaging material, may be digitally printed on the outside (i.e., the side intended as the exterior side of the laminated packaging material) for example by ink-jet printing, dried, and laminated in between sealable layers. Optionally, the paperboard layer may be pre-coated before the printing, and/or already be bonded to one or more layers.

During the entire converting process, it is important to maintain a desired moisture level of the paperboard layer; not only for ensuring optimum performance of various converting processes, but also to control the desired properties of the final packaging container.

A suggested technique for drying the paperboard layer after digital printing using water-based inks, such as pigmented water-based inks, is infrared radiation. While this technique allows for a fast drying, it has been observed that more powerful drying will also dry the paperboard layer, i.e., the moisture content of the paperboard layer will be reduced. The moisture loss in an area of the paperboard layer will vary with the printed design and in particular be related to the color printed on the area, or if an area is unprinted. A low paperboard moisture content will affect the converting process negatively, especially when the paperboard layer is creased prior to lamination. If the moisture content of the paperboard layer is reduced to a certain level, the paperboard layer will crack rather than bend, potentially reducing the quality of the final laminated packaging material and the packaging containers produced from the laminated packaging material. On the other hand, if the printed design is not sufficiently dried, it may result in defects related to scuffing or smearing. Thus, there is a need in the art for improvements of laminated packaging material, especially with regards to ink drying.

### Summary

It is an object of the invention to at least partly overcome one or more of the above-identified limitations of the prior art. In particular, it is an object to provide a reliable and efficient method for manufacturing a laminated packaging material with a maintained moisture level of the paperboard layer.

To solve these objects a continuous in-line method for manufacturing a laminated packaging material is provided. The method comprises applying a reflective layer configured to reflect IR, infrared radiation, on a paperboard layer, ink-jet printing a décor layer on the paperboard layer, and drying the décor layer by exposing the paperboard layer to IR.

The method is advantageous in that the moisture content of the paperboard layer is substantially maintained. The moisture content of the paperboard layer after drying may for instance be 4% or more, between 5% and 10%, or preferably between 5% and 8.5%. This is at least partly achieved by the reflective layer decreasing the transmission of IR to the paperboard layer such that the décor layer may be dried without overexposing the paperboard layer to the IR.

The infrared radiation may have a spectral emission within 0.4 µm - 4 µm. Thus, the infrared radiation may be a near-infrared radiation, a short-wave infrared radiation, a mid-wave infrared radiation, or a radiation in several infrared regions. The reflective layer may be configured to reflect radiation within the same range 0.4 µm - 4 µm.

The method may further comprise providing a crease line pattern to the paperboard layer and laminating at least a further layer to the printed and creased paperboard layer.

The paperboard layer may be transported along a machine direction, preferably at a substantially constant speed, for example on at least 100 m/min, such as 200 m/min or faster.

The step of applying the reflective layer may comprise flexographic printing. Alternatively, or additionally, the step of applying the reflective layer may comprise ink-jet printing. A print surface of the paperboard layer may hence be printed using ink-jet printing only, or by a hybrid approach combining two or more printing techniques.

The method may further comprise providing a clay coat layer on the paperboard layer. The clay coat layer may form a water repellant surface on the paperboard layer meaning that the solvent of the ink cannot migrate, i.e., be absorbed, into the paperboard fibrous layer.

The clay coat layer may be provided prior to the step of ink-jet printing the décor layer. The clay coat layer may be provided prior to or after the step of applying the reflective layer. The paperboard layer may be provided with the clay coat layer immediately before the décor layer and/or the reflective layer on the same production site. Alternatively, the paperboard layer may be provided with the clay coat layer in advance, for example at another production site, so on the site, where the applying of the reflective layer and the décor layer is realized, no application of the clay coat layer is realized.

The method may further comprise applying a pre-coating layer to the paperboard layer prior to ink-jet printing the décor layer.

The pre-coating layer may be applied before or after the reflective layer is applied. Applying a pre-coating layer may comprise coating with a material, priming the paperboard layer by a plasma treatment, and/or applying a surface conditioner that changes the topology or properties relating to static electricity. The pre-coating layer may be applied to fully or partly cover the paperboard layer, it may cover only the areas to be covered by the décor layer and/or the reflective layer, or it may cover an intermediately sized area of the paperboard layer.

The paperboard layer may be an uncoated paperboard, or a paperboard laminated with one or more layers, for example polymer layers, before ink-jet printing and/or application of the reflective layer.

Preferably, the paperboard layer has a thickness of minimum 90 µm, and/or a grammage of minimum 65 gram per square meter. In addition, the paperboard layer may have a thickness of maximum 560 µm, and/or a grammage of minimum 350 gram per square meter. The paperboard layer may have a thickness of about 325-425 µm. The paperboard layer may have a grammage of about 200-320 gram per square meter. The paperboard layer used may have a stiffness of minimum 30 mN, and/or a maximum of 475 mN, such as about 200-320 mN.

The applied reflective layer may have a thickness of 2-14 µm, preferably 2-5µm.

The reflective layer may comprise white ink and/or other material configured to reflect infrared radiation. By being configured to reflect infrared radiation, it is implied that the layer has a very low reflectance in a wavelength spectrum of 0.4 µm - 4 µm. Examples of such treatment, as described further in the following detailed description, provides decreased transmission of the IR into the paperboard layer. More than one reflective layer may be provided.

Properties of a pre-coating layer and a reflective layer may be combined into a single reflecting layer, providing both an adhesive print surface for the décor layer and an IR reflecting layer.

The reflective layer may be applied in the paperboard layer.

The paperboard layer may include the reflective layer, providing a single reflecting layer. If the paperboard contains reflective material, i.e., a reflective layer, an additional reflective layer may be applied thereto on the outer side, e.g., before or after additional layers been provided.

The paperboard may be provided with a clay coat layer. The clay coat layer may include the reflective layer, providing a single reflecting layer.

The reflective layer may be provided to the clay coat layer, or to a pre-coating layer provided to said clay coat layer.

The décor layer may include the reflective layer, providing a single reflecting layer.

Another aspect of the invention refers to a converting unit configured to manufacture a laminated packaging material. The converting unit may be configured to perform the continuous in-line method for manufacturing a laminated packaging material described herein and therefore implies all aspects disclosed with regard to that method.

The converting unit comprises a first printer station configured to print a reflective layer on a paperboard layer, a second printer station configured to print a décor layer on the paperboard layer, and a drying station configured to dry the décor layer by exposing the paperboard layer to infrared radiation.

The converting unit is advantageous in that moisture loss in the paperboard layer is minimized. By being configured to print a reflective layer, a desired level of moisture content in the paperboard layer can be ensured.

The converting unit may further comprise a feeding unit configured to continuously forward the paperboard layer, preferably at a constant speed.

The converting unit may further comprise a creasing station configured to provide a crease line pattern to the paperboard layer, and/or at least one lamination station configured to laminate at least a further layer to the printed and creased paperboard layer.

It is possible to have the creasing station and/or the lamination station downstream or upstream of the first and second printer stations; or to have more than one creasing stations and/or lamination stations located on both downstream and upstream of the printer stations; or having a combined unit for the printer stations and the creasing station and/or lamination station that allows creasing and/or lamination before and/or after the printing.

The first printer station may comprise a flexographic printer. The second printer station may comprise an ink-jet printer. The first and second printer stations may be comprised in a combined printer unit. If the décor layer includes the reflective layer, this combined layer may be provided as a single reflecting layer using, the first and/or second printer stations comprised in a combined printer unit.

The converting unit may further comprise a pre-coating station configured to apply a pre-coating layer to prepare the paperboard layer before being printed by one or both of the printer stations. As mentioned above, applying a pre-coating layer may comprise coating the paperboard layer, or priming the paperboard layer by a plasma treatment of the surface of the paperboard layer, or applying a surface conditioner, or in other ways modify the properties of a surface of the paperboard layer. The converting unit may further comprise a second drying station for drying the pre-coating layer.

The stations of the converting unit may be arranged in the following order, upstream to downstream: first printer station, second printer station, drying station, creasing station, lamination station.

Another aspect of the invention refers to a laminated packaging material. The laminated packaging material may be obtained from the converting unit and/or by the method steps described herein. The laminated packaging material comprises a paperboard layer having a reflective layer and an ink-jet printed décor layer.

The laminated packaging material is advantageous in that the moisture content of the paperboard layer is controlled. Preferably, the moisture content is 4% or more, more preferably between 5% and 10%, and even more preferably between 5% and 8.5%.

As an example, the moisture content of the paperboard layer may be between 6% and 8.5% after ink-jet printing the décor layer, and in the final laminated packaging material web, the moisture content of the paperboard layer may be substantially the same, or slightly lower. This implies that the paperboard layer has not suffered any significant moisture loss, at least of a magnitude that would result in any major defects of the laminated packaging material.

The décor layer may be arranged on top of the reflective layer on the paperboard layer in the laminated packaging material. A pre-coating layer may be arranged between the décor layer and the reflective layer, or between the reflective layer and the paperboard layer.

A clay coat layer may be arranged on the paperboard layer, under the reflective layer and the décor layer. Alternatively, the clay coat layer may be arranged on top of the reflective layer and under the décor layer.

Possible layer structures that may be provided on the outer side of the paperboard layer are indicated below:
1) Décor layer/pre-coating layer/reflective layer/clay coat layer/paperboard layer
2) Décor layer/ reflective layer/pre-coating layer/clay coat layer/paperboard layer
3) Décor layer & reflective layer as single layer/pre-coating layer/clay coat layer/paperboard layer
4) Décor layer/pre-coating layer/clay coat layer & reflective layer as single layer/paperboard layer
5) Décor layer/ reflective layer/pre-coating layer/clay coat layer/paperboard layer & reflective layer as single layer.

The laminated packaging material may have a crease line pattern, and, for example, the crease line pattern may be cyclically repeated in a machine direction.

According to a further aspect, a continuous in-line method for manufacturing a laminated packaging material is provided. The method comprises providing a paperboard layer, and adding a reflective layer directly or indirectly to the paperboard layer, said reflective layer being configured to reflect infrared radiation. The method further comprises ink-jet printing a décor layer such that the reflective layer is at least to some extent arranged between the paperboard layer and the décor layer, and drying the décor layer by exposing the décor layer to infrared radiation.

In an embodiment, the décor layer is arranged at an outer side of the paperboard layer, and drying the décor layer is performed by irradiating the décor layer from the outer side.

In an embodiment the method further comprises providing a crease line pattern to the paperboard layer, and laminating at least a further layer to the printed and creased paperboard layer.

In an embodiment, the step of applying the reflective layer comprises flexographic printing.

In an embodiment, the method further comprises providing a clay coat layer, such that the reflective layer is applied on the clay coat layer.

In an embodiment the method further comprises applying a pre-coating layer to the paperboard layer prior to ink-jet printing the décor layer.

In an embodiment, drying the décor layer comprises exposing the décor layer to drying radiation comprising said infrared radiation, wherein the drying radiation has a spectral emission within 0.4 µm - 4 µm, and wherein the reflective layer is configured to reflect radiation within the same range.

In an embodiment the applied reflective layer has a thickness of 2-14 µm, preferably 2-5 µm.

In an embodiment the reflective layer comprises white ink.

According to a further aspect, a converting unit is provided. The converting unit is configured to manufacture a laminated packaging material, and comprises a first printer station configured to print a reflective layer on a paperboard layer, a second printer station configured to print a décor layer on the reflective layer, and a drying station configured to dry the décor layer by exposing the décor layer to infrared radiation.

The converting unit may further comprise a creasing station configured to provide a crease line pattern to the paperboard layer, and at least one lamination station configured to laminate at least a further layer to the printed and creased paperboard layer.

In an embodiment, the first printer station comprises a flexographic printer and/or the second printer station comprises an ink-jet printer.

In an embodiment, the comprised stations are arranged in the following order, upstream to downstream: first printer station, second printer station, drying station, creasing station, and lamination station.

According to a further aspect, a laminated packaging material is provided. The packaging material comprises a paperboard layer having a reflective layer being configured to reflect infrared radiation, and an ink-jet printed décor layer, wherein the reflective layer is at least to some extent arranged between the paperboard layer and the décor layer.

In an embodiment, the moisture content of the paperboard layer is 4% or more, preferably between 5% and 10%, more preferably between 5% and 8.5%.

In an embodiment a clay coat layer is arranged on the paperboard layer, underneath the reflective layer and the décor layer.

All possible features mentioned above should be assumed as valid for all aspects of the invention, as long as being under the scope of the claims.

Still other objectives, features, aspects, and advantages of the invention will appear from the following detailed description as well as from the drawings.

### Brief Description of the Drawings

Embodiments of the invention will now be described, by way of example, with reference to the accompanying schematic drawings.
Fig. 1 is a flow chart of a method for manufacturing a laminated packaging material according to an embodiment.
Fig. 2A is a cross-sectional view of a laminated packaging material according to an embodiment.
Fig. 2B is a cross-sectional view of a laminated packaging material according to an embodiment.
Fig. 2C is a cross-sectional view of a laminated packaging material according to an embodiment.
Fig. 3 is a diagram showing the spectral content of drying radiation according to one example.
Fig. 4 is a schematic view of a converting unit according to an embodiment.

### Detailed Description

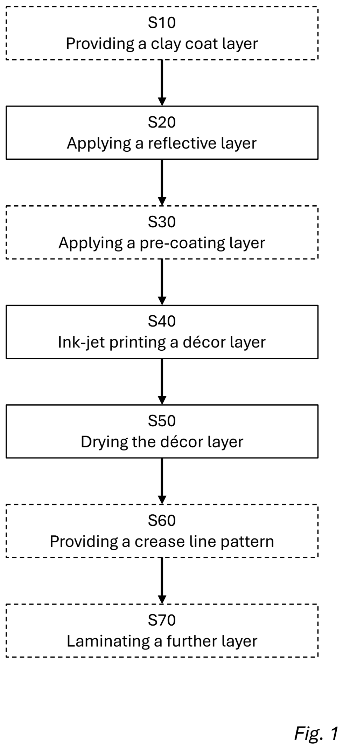

With reference to Fig. 1 an embodiment of a continuous in-line method for manufacturing a laminated packaging material 100 is illustrated. The method comprises an optional step of providing S10 a clay coat layer 120 on an outer side of the paperboard layer 110, i.e. the side of the paperboard layer 110 being intended to face outwards ,being the exterior side of a final packaging container being manufactured from the laminated packaging material 100. The paperboard layer 110 may comprise paper, paperboard, or other cellulose-based material. A purpose of the clay coat 120 layer is to form a water repellant surface on the paperboard layer 110 such that when the paperboard layer 110 is printed with an ink, the solvent of the ink cannot migrate into the paperboard layer 110.

The method further comprises applying S20 a reflective layer 130 configured to reflect drying radiation, in particular infrared radiation IR on a paperboard layer 110. The reflective layer 130 may comprise white ink. Alternatively, or additionally, the reflective layer may comprise other pigment, nano material, or optical components configured to reflect infrared radiation. By being configured to reflect drying radiation, including infrared radiation IR, it is implied that the layer has a high reflectance in a wavelength spectrum of 0.4 µm - 4 µm. The reflective layer 130 may be applied by flexographic printing. Flexography often abbreviated to flexo is a form of printing process which utilizes a flexible relief plate. It is essentially a modern version of letterpress, evolved with high speed rotary functionality, which can be used for printing on almost any type of substrate, including plastic, metallic films, cellophane, and paper.

The reflective layer 130 may alternatively be applied S20 by another technique such as ink-jet printing, or a combination of printing techniques may be realized. Ink-jet printing is a type of digital printing or computer printing. During ink-jet printing, a digital image is recreated by propelling a plurality of ink droplets onto a substrate, such as a paperboard layer 110. The plurality of ink droplets may comprise a solvent and color pigments or dyes. The solvent may comprise water, nonvolatile organic content, and/or volatile organic content, for instance alcohols with high boiling point. Ink used for ink-jet printing may comprise a higher ratio of solvent relative color pigment than ink used for flexographic printing. For instance, ink-jet ink may comprise approximately 4 times more solvent content than flexographic ink. Further, the total amount of ink laid down on the paperboard layer 110 is typically several times more for ink-jet printing as compared to flexographic printing.

The method further comprises an optional step of applying S30 a pre-coating layer 140 to the paperboard layer 110. Applying S30 the pre-coating layer 140 may for instance comprise coating the paperboard layer 110 with a pre-coating, priming the paperboard layer 110 by a plasma treatment, flame treatment, corona treatment or applying a surface conditioner, thereby conditioning the surface, for instance like, changing the topology, surface tension, wettability, properties relating to static electricity, or other surface properties. It is to be noted that the optional step of applying S30 a pre-coating layer 140 to the paperboard layer 110, may be done before application S20 of the reflective layer 130, or after application S20 of the reflective layer 130 (not illustrated).

The method further comprises ink-jet printing S40 a décor layer 150 on the paperboard layer 110. The ink-jet printing S40 of a décor layer 150 on the paperboard layer 110 may as an alternative be reflective layer 130 e.g., applied via digital ink-jet printing technology, on or in the same layer as the décor layer 150, e.g., digital printed ink, optionally on top of the pre-coating layer 140 (not illustrated). As mentioned above, ink-jet printing requires an ink with a higher ratio of solvent relative color pigment than ink used for other printing techniques. Hence, for ink-jet printing it is even more important to provide a fast drying process such as IR drying, where the spectral energy transfer process is very efficient. The rapid removal of solvent from the plurality of ink droplets may further create a brighter and more vibrant print on the paperboard layer 110. As such, the method further comprises drying S50 the décor layer 150 by exposing the paperboard layer 110 to drying radiation DR, wherein the drying radiation comprises infrared radiation IR. By drying S50 the décor layer 150, the color pigments of the ink in the layer 150 are immobilized. The drying S50 is performed by evaporating at least some of the solvent by applying drying radiation onto the paperboard layer 110. During drying, the drying radiation radiates onto the décor layer 150, where it to some extent will be absorbed by ink in the layer, causing solvent of the ink to evaporate from the paperboard layer 110. A common problem with IR drying however, is the penetration depth that allows the IR to not only interact with the décor layer, but also layers underneath, such as the paperboard layer 110. The intensity of the IR affects the level of transmission through the paperboard layer 110 and may to some extent be adjusted. Ideally, the wavelength, intensity, and exposure time of the IR radiation should be selected such that a minimum amount of energy is transmitted to the paperboard layer 110 and absorbed by its water molecules, thereby reducing the moisture content loss of the paperboard layer 110. In order to ensure a reliable and time efficient process however, the penetration depth will have to be deeper than the thickness of the décor layer.

Advantageously, the reflective layer 130, applied under the décor layer 150, reflects at least some of the IR back through the décor layer 150 and reduces the transmission of IR to the paperboard layer 110, allowing IR drying to be realized at a sufficient intensity for efficient drying of the décor layer 150 while protecting the paperboard layer 110 from critical moisture loss. This is beneficial, at least because a reduced moisture content of the paperboard layer 110 will cause the layer 110 to crack rather than bend during handling, potentially reducing the quality of the final laminated packaging material and the packaging containers produced from the laminated packaging material. On the other hand, if the printed design is not sufficiently dried, it may result in defects related to scuffing or smearing.

It is possible to combine the reflective layer 130 with other measures to reduce the IR exposure of the paperboard layer 110. For instance, the method may further comprise absorbing IR transmitted through the paperboard layer 110 by an absorption surface, not illustrated, arranged on the opposite side of the paperboard layer 110 with regard to the décor layer 150. By this, reflection of the IR that travels through the paperboard layer 110 is prevented to travel back through the paperboard layer 110.

Although IR drying is beneficial for many reasons, the step of drying S50 the décor layer 150 does not have to exclusively rely on IR exposure. The step of drying may further comprise applying hot air to the print surface. This is beneficial as it facilitates a maintained moisture content at a minimized drying time. The hot air may be applied during or after the IR exposure. By this, time efficiency of the method is ensured while still ensuring a desired level of moisture content in the paperboard layer. The method may further comprise determining an adjusted drying power based on a determined moisture parameter, the determined moisture parameter being indicative of the paperboard moisture content, and the infrared radiation and/or hot air may be applied at the adjusted drying power. By this, an efficient way to maintain the moisture level of the paperboard layer is ensured. The adjusted drying power may be determined separately for the infrared radiation and the hot air, such that the infrared radiation and the hot air are applied at a ratio based on the determined moisture parameter. Hence, efficiency of the process may be increased even more.

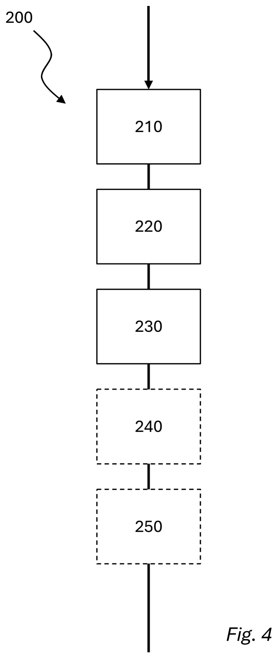

The method further comprises the optional step of providing S60 a crease line pattern to the paperboard layer 110, preferably after the step of printing S40 and drying S50. The crease line pattern facilitates the formation of a packaging container from the laminated packaging material 100, not illustrated. The crease line pattern may be repeated in a machine direction. The machine direction may be defined as the direction parallel to the movement of the paperboard layer 110 through a manufacturing equipment such as a converting unit 200, or as the circumferential direction of a roll of paper used for providing the paperboard layer 110. The laminate packaging material 100 may have a machine direction, and a transverse direction, defined in perpendicular direction to the machine direction. The dimension of the laminate packaging material 100 in the machine direction may be substantially larger than in the transverse direction. During the method, the paperboard layer 110 may be transported along the machine direction as defined above at a substantially constant speed. An example path of the paperboard layer 110 through a converting unit 200 is illustrated in Fig. 4 as a continuous line with arrowheads pointing in the machine direction.

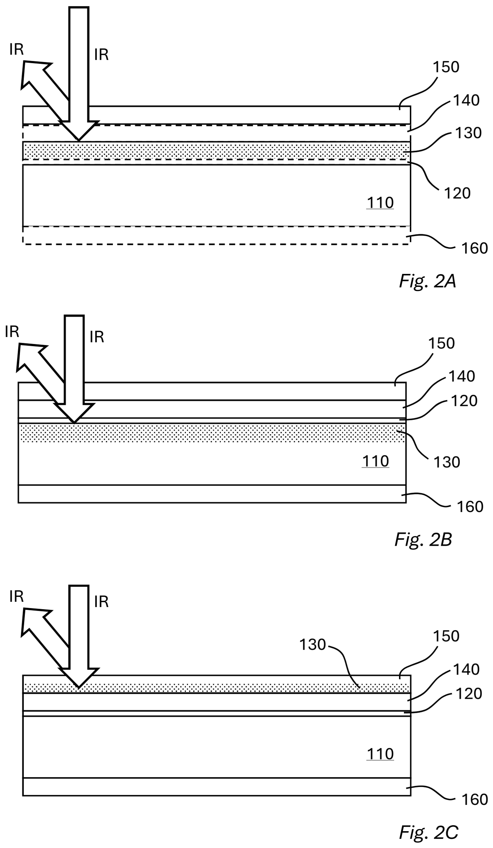

The method further comprises the optional step of laminating S70 at least a further layer 160 to the printed and creased paperboard layer 110. The laminated packaging material 100 may for instance comprises two sealable layers, e.g., heat sealable layers, arranged on the outside of the laminated packaging material 100, to constitute the outside or exterior of a packaging container formed from the laminated packaging material 100, and/or the inside of the laminated packaging material 100, to be in direct contact with a filled food product in the packaging container. The sealable layers are preferably liquid tight. The sealable layers may be heat sealable or comprise a thermoplastic material. Further, the laminated further layer 160, may include a barrier layer, and may be laminated to the paperboard layer 110, preferably below the paperboard layer 110 as illustrated in Fig. 2A, i.e., intended to be facing the inside of a finished package. The barrier layer may comprise any barrier material that is suitable to maintain a food safe environment for the packaged liquid food product. This covers metals, such as aluminum foil, polymer materials, such as ethylene vinyl alcohol copolymers, EVOH, or polyamides, PA, polysaccharides such as starch or fibrillar or crystalline cellulose, polymer--based film substrates being provided with a barrier coating; the barrier coating being selected from metals, metal oxides, inorganic oxides, other inorganic compounds or carbon-based coatings, such as amorphous diamondlike carbon, DLC, coatings. The barrier layer of the laminated further layer 160 may be a cellulose based material and/or a composite material or multilayer coating material, for example comprising a non-metal material such as plastic, paper or cellulose-based material and a metal material for instance comprising aluminum.

During a conversion process comprising creasing S60 and laminating S70 it is of even higher importance to maintain an adequate moisture level in the paperboard layer 110 in order to prevent cracking and other processing defects.

In Fig. 1, the method is illustrated as sequential with the different steps S10, S20, S30, S40, S50, S60, S70 performed in a certain order. It should be realized that a number of variations to this exemplary order are possible. The reflective layer 130 may for instance be applied directly under the décor layer 150, on top of a pre-coating layer 140, or under a clay coat layer 120. Further, the reflective layer 130 may be comprised in the paperboard layer 110, the clay coat layer 120, the pre-coating layer 140, the décor layer 150, or a laminated further layer 160. If the reflective layer 130 is comprised in a laminated further layer 160, the layer 160 is preferably arranged between the paperboard layer 110 and the décor layer 150, not illustrated, i.e., said laminated further layer 160 is positioned on the outer side of the paperboard layer 110.

Turning now to Fig. 2A, a laminated packaging material 100 is illustrated. The laminated packaging material 100 comprises a paperboard layer 110 having a reflective layer 130 and an ink-jet printed décor layer 150. The laminated packaging material 100 further comprises a clay coat layer 120, a pre-coating layer 140 and a laminated further layer 160, illustrated with dashed lines, indicating that the layers 120, 140, 160 are optional. Although the layers 110, 120, 130, 140, 150, 160 of the laminated packaging material 100 are illustrated in a certain order, various different arrangements are possible. As an example, the laminated further layer 160 may be arranged immediately on top of the paperboard layer 110, or on top of any of the other layers 120, 130, 140, 150. The reflective layer 130 may be arranged directly under the décor layer 150, on top of a pre-coating layer 140, or under a clay coat layer 120. Further, the reflective layer 130 may be comprised in the paperboard layer 110, the clay coat layer 120, the pre-coating layer 140, or a laminated further layer 160. One or more of the optional layers 120, 140, 160 may be omitted or arranged in other ways not shown in Fig. 2A. Possible layer structures (not illustrated) that may be provided from the outer side of the paperboard layer are indicated below:
1) Laminated further layer 160/décor layer 150/pre-coating layer 140/reflective layer 130/clay coat layer 120/paperboard layer 110/laminated further layer 160,
2) Laminated further layer 160/décor layer 150/ reflective layer 130/pre-coating layer 140/clay coat layer 120/paperboard layer 110/ laminated further layer 160,
3) Laminated further layer 160/décor layer 150 & reflective layer 130 as single layer/pre-coating layer140/clay coat layer120/paperboard layer 110/ laminated further layer 160,
4) Laminated further layer 160/décor layer 150/pre-coating layer 140/clay coat layer 120 & reflective layer 130 as single layer/paperboard layer 110/ laminated further layer 160,
5) Laminated further layer 160/décor layer 150/ reflective layer 130/pre-coating layer 140/clay coat layer 120/paperboard layer 110 & reflective layer 130 as single layer/ laminated further layer 160.

Two other examples are shown schematically in Figs 2B-2C. In Fig. 2B the reflective layer 130 is embedded into the paperboard layer 130, at least to some extent. In Fig. 2C another example is shown in which the reflective layer 130 is at least to some extent embedded into the décor layer 150.

The laminated packaging material 100 may be a result from a manufacturing process as described above, and all aspects disclosed with regard to the method may be implied also for the laminated packaging material 100, as well as the other way around. In Fig. 2, IR emission similar to the IR exposed to the paperboard layer 110 during the step of drying S50 the décor layer 150 is illustrated. The IR emission in Fig. 2 radiates through the décor layer 150 and the pre-coating layer 140, and reflects on the reflective layer 130, illustrated by an arrow going up through the pre-coating layer 140 and the décor layer 150 again. The reflected IR radiation is thus prevented from reaching the paperboard layer 110 and drying the moisture therein. Although not explicitly illustrated in Figs. 2A-2C, the paperboard layer 110 of the laminated packaging material 100 may after the method of Fig. 1 have a moisture content of 4% or more, between 5% and 10%, or, preferably, between 5% and 8.5%. The moisture content of the paperboard layer 110 may, after the method described above, not be significantly lower than the moisture content provided before the steps of the method is carried out. As an example, the provided moisture content of the paperboard layer 110 may be between 6% and 8.5% before the step of drying S50 the décor layer 150. This implies that the paperboard layer 110 of the laminated packaging material 100 has not suffered moisture losses of a magnitude that would result in any defects of the paperboard layer 110, and that quality of the final product is ensured.

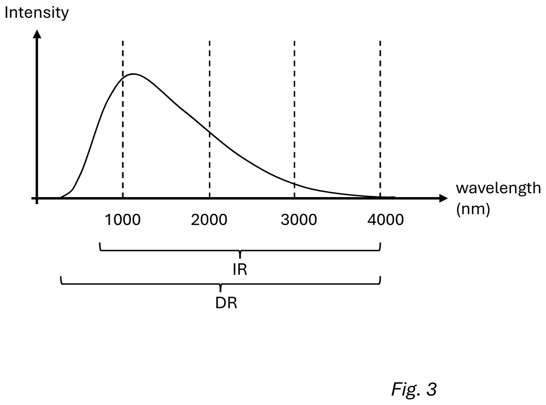

In Fig. 3 an example of a suitable drying radiation DR is schematically shown. The drying radiation DR may be provided by one or more drying emitters having a radiation profile as shown in Fig. 3. The drying radiation DR comprises some visible light (typically in the range of 400-700 nm), and a majority of infrared light (typically in the range of 700-4000 nm). Depending on the ink used to provide the décor layer, some or all of the spectral content of the drying radiation DR may be used to dry the ink. Likewise, depending on the reflective layer 130 some or all of the spectral content of the drying radiation DR may be reflected. Typically, the energy of the drying radiation DR is in the range of 20-50 J/cm2, with intensity peak around 400-1100 nm.

Turning now to Fig. 4, a converting unit 200 configured to manufacture a laminated packaging material 100 is illustrated in a schematic view. The converting unit 200 may be configured to perform the method as described above with reference to Fig. 1 in order to produce a laminated packaging material 100 as described with reference to Figs. 2A-2C, and all aspects disclosed with regard to the method and the material 100 may be implied also for the converting unit 200, as well as the other way around. The converting unit 200 comprises a first printer station 210 configured to print a reflective layer 130 on a paperboard layer 110, and a second printer station 220 configured to print a décor layer 150 on the paperboard layer 110. The first printer station 210 may comprise a flexographic printer and/or an ink-jet printer. The second printer station 220 may comprise an ink-jet printer configured to print a plurality of ink droplets comprising color pigments and a solvent on the paperboard layer 110, and/or a flexographic printer. The converting unit 200 may also comprise a pre-coating station and/or a clay coating station, not shown, with reference to the method explained before, before the printer stations 210, 220.

The converting unit 200 further comprises a drying station 230 configured to dry the décor layer 150 by exposing the paperboard layer 110 to IR. The drying station 230 may further be configured to dry the plurality of ink droplets by exposing the paperboard layer 110 to hot air. The drying station 230 may comprise a hot air dryer distinct from an infrared dryer, and the hot air dryer may be arranged downstream the infrared dryer. The benefits of drying with IR and combining IR with hot air are explained above. The drying station 230 may be arranged to extend in the transverse direction, and across the paperboard layer 110.

The converting unit 200 may further comprise a feeding unit configured to continuously forward the paperboard layer 110, preferably at a constant speed and/or in the machine direction as defined above.

The converting unit 200 may further comprise a creasing station 240 configured to provide a crease line pattern to the paperboard layer 110, and at least one lamination station 250 configured to laminate at least a further layer 160 to the printed and creased paperboard layer 110. The creasing station 240 and the lamination station are illustrated with dashed lines in Fig. 4, indicating that they are optional.

The stations 210, 220, 230, 240, 250 of the converting unit 200 are illustrated in a certain order, upstream to downstream, in Fig. 4. Analogously with the method as described above, it should be realized that a number of variations are possible.

From the description above follows that, although various embodiments of the invention have been described and shown, the invention is not restricted thereto but may also be embodied in other ways within the scope of the subject-matter defined in the following claims.

## Claims

1. A continuous in-line method for manufacturing a laminated packaging material (100), comprising:
providing a paperboard layer (110),
adding (S20) a reflective layer (130) to the paperboard layer (110), said reflective layer (130) being configured to reflect infrared radiation (IR),
ink-jet printing (S40) a décor layer (150) such that the reflective layer (130) is at least to some extent arranged between the paperboard layer (130) and the décor layer (150), and
drying (S50) the décor layer (150) by exposing the décor layer (150) to infrared radiation (IR).

2. The method according to claim 1, wherein the décor layer (150) is arranged at an outer side of the paperboard layer (110), and wherein drying (S50) the décor layer (150) is performed by irradiating the décor layer (150) from the outer side.

3. Method according to claim 1 or 2, further comprising:
providing (S60) a crease line pattern to the paperboard layer (110), and
laminating (S70) at least a further layer (160) to the printed and creased paperboard layer (110).

4. Method according to any preceding claim, wherein the step of applying (S20) the reflective layer (130) comprises flexographic printing.

5. Method according to claim any preceding claim, further comprising:
providing (S10) a clay coat layer (120), such that the reflective layer (130) is applied on the clay coat layer (120).

6. Method according to any preceding claim, further comprising:
applying (S30) a pre-coating layer (140) to the paperboard layer (110) prior to ink-jet printing (S40) the décor layer (150).

7. Method according to any preceding claim, wherein drying (S50) the décor layer (150) comprises exposing the décor layer (150) to drying radiation (DR) comprising said infrared radiation (IR), wherein the drying radiation (DR) has a spectral emission within 0.4 µm - 4 µm, and wherein the reflective layer (130) is configured to reflect radiation within the same range.

8. Method according to any preceding claim, wherein the applied reflective layer (130) has a thickness of 2-14 µm, preferably 2-5 µm.

9. Method according to any preceding claim, wherein the reflective layer (130) comprises white ink.

10. A converting unit (200) configured to manufacture a laminated packaging material (100), comprising a first printer station (210) configured to print a reflective layer (130) on a paperboard layer (110), a second printer station (220) configured to print a décor layer (150) on the reflective layer (110), and a drying station (230) configured to dry the décor layer (150) by exposing the décor layer (150) to infrared radiation (IR).

11. The converting unit (200) according to claim 10 further comprising a creasing station (240) configured to provide a crease line pattern to the paperboard layer (110), and at least one lamination station (250) configured to laminate at least a further layer (160) to the printed and creased paperboard layer (110).

12. The converting unit (200) according to claim 10 or 11, wherein the first printer station (210) comprises a flexographic printer and/or the second printer station (220) comprises an ink-jet printer.

13. The converting unit (200) according to any one of claims 10-12, wherein the comprised stations are arranged in the following order, upstream to downstream: first printer station (210), second printer station (220), drying station (230), creasing station (240), and lamination station (250).

14. A laminated packaging material (100), comprising a paperboard layer (110) having a reflective layer (130) being configured to reflect infrared radiation (IR), and an ink-jet printed décor layer (150), wherein the reflective layer (130) is at least to some extent arranged between the paperboard layer (130) and the décor layer (150).

15. The laminated packaging material (100) according to claim 14, **characterized in that** the moisture content of the paperboard layer (110) is 4% or more, preferably between 5% and 10%, more preferably between 5% and 8.5%.

16. The laminated packaging material (100) according to any one of claims 14-15, wherein a clay coat layer (120) is arranged on the paperboard layer (110), underneath the reflective layer (130) and the décor layer (150).
